(19) Europäisches Patentamt / European Patent Office / Office européen des brevets

(11) **EP 2 434 448 A2**

(12) **EUROPEAN PATENT APPLICATION**

(43) Date of publication:
**28.03.2012 Bulletin 2012/13**

(51) Int Cl.:
***G06Q 30/00*** *(2012.01)*

(21) Application number: **11181868.8**

(22) Date of filing: **19.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.09.2010 US 924215**

(71) Applicant: **Sony Corporation**
**Tokyo 108-0075 (JP)**

(72) Inventors:
 • **Smith, Tim**
   **Carlsbad, CA California 92011 (US)**

 • **Loughery III, Donald L.**
   **Long Beach, CA California 90803 (US)**
 • **Frazier, Milton**
   **San Marcos, CA California 92069 (US)**
 • **Rainier, Rajiv**
   **San Diego, CA California 92127 (US)**
 • **Jacobs, Stephen**
   **Ardsley, NY New York 10022 (US)**
 • **Noronha, Austin**
   **Sunnyvale, CA California 94086 (US)**

(74) Representative: **McGowan, Cathrine**
   **D Young & Co LLP**
   **120 Holborn**
   **London EC1N 2DY (GB)**

(54) **System and method for effectively performing an advertisement selection procedure**

(57) A system and method for implementing an information distribution network includes an information service that is configured to provide information distribution services through the information distribution network. User devices are utilized by device users to communicate with the information service for receiving the information distribution services. Transport structures are implemented for communicating with various network entities in the information distribution network to collect appropriate metadata. An advertisement selector utilizes an advertisement selection algorithm for evaluating the collected metadata during the advertisement selection procedure to thereby identify targeted advertisements for providing to user devices through the information distribution network.

FIG. 1

**Description**

BACKGROUND SECTION

1. Field of the Invention

This invention relates generally to techniques for distributing electronic information, and relates more particularly to a system and method for effectively implementing an advertisement selection procedure.

2. Description of the Background Art

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

SUMMARY

Aspects of the invention as defined in the appended claims.

In accordance with embodiments of the present invention, a system and method for effectively performing an advertisement selection procedure are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, and respective advertisers from an information service. In addition, the transport structures may also be utilized to provide links to targeted advertisements and/or electronic content to appropriate user devices.

In accordance with one embodiment of the present invention, an ad selector may be implemented to perform an ad selection procedure by performing metadata analyses upon the various types of metadata from the transport structures to make appropriate ad selections. In certain embodiments, the ad selector may analyze the gathered metadata in light of predefined selection criteria to identify specific targeting characteristics and parameters contained in the metadata. For example, targeting characteristics may include, but are not limited to, selected information from user metadata, device metadata, network metadata, ad metadata, and location metadata.

In certain embodiments, the ad selector may utilize an ad selection algorithm for evaluating and identifying relevant advertisements in light of the selected ad selection factors. In one embodiment, the different ad selection factors may be emphasized or de-emphasized by assigning factor weighting values that depend on the relative importance of the respective ad selection factors in making the advertisements both effective for the advertisers and relevant to the consumers. For at least the foregoing reasons, the present invention therefore provides an improved system and method for effectively performing an advertisement selection procedure.

BRIEF DESCRIPTION OF THE DRAWINGS

Embodiments of the invention will now be described with reference to the accompanying drawings, throughout which like parts are referred to by like references, and in which:

FIG. 1 is a block diagram of a distribution system, in accordance with one embodiment of the present invention;
FIG. 2A is a block diagram for one embodiment of a transport structure, in accordance with the present invention;
FIG. 2B is a block diagram for one embodiment of a media file, in accordance with the present invention;
FIG. 3 is a block diagram for one embodiment of a user device from FIG. 1, in accordance with the present invention;
FIG. 4 is a block diagram for one embodiment of the user memory from FIG. 3, in accordance with the present invention;
FIG. 5 is a block diagram for one embodiment of the information service from FIG. 1, in accordance with the present invention;
FIG. 6A is a block diagram for one embodiment of the transport server from FIG. 5, in accordance with the present invention;
FIG. 6B is a block diagram for one embodiment of the server memory from FIG. 6A, in accordance with the present invention; and
FIG. 7 is a block diagram for one embodiment of the ad server from FIG. 5, in accordance with the present invention.

DETAILED DESCRIPTION

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention, as defined by the appended claims, is not intended to be limited to the embodiments shown, but is to be accorded the widest scope consistent with the principles and features described herein.

The present invention comprises a system and method for implementing an information distribution network, and includes an information service that is configured to provide information distribution services through the information distribution network. User devices are utilized by device users to communicate with the information service for receiving the information distribution services. Transport structures are implemented for communicating with various network entities in the information distribution network to collect appropriate metadata. An advertisement selector utilizes an advertisement selection algorithm for evaluating the collected metadata during the advertisement selection procedure to thereby identify targeted advertisements for providing to user devices through the information distribution network.

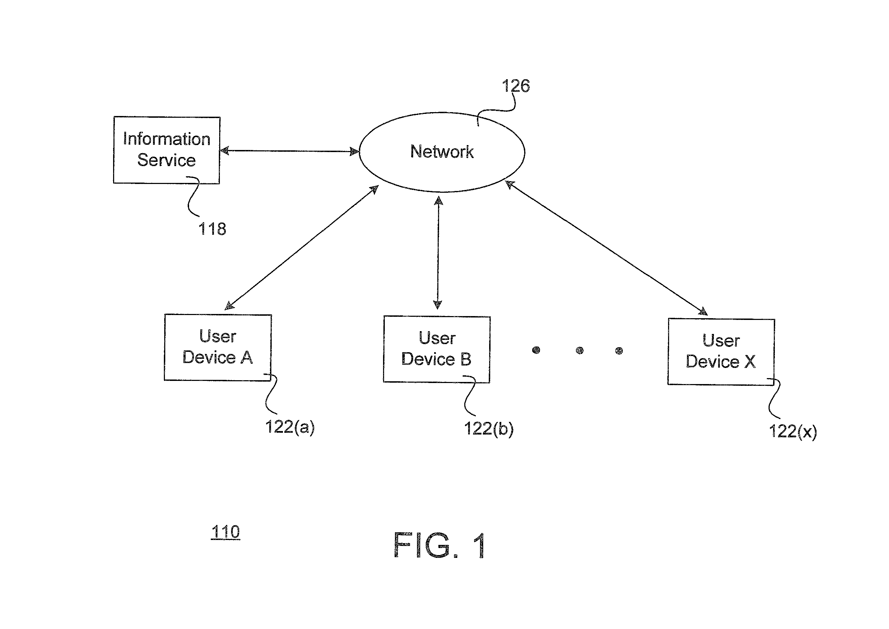

Referring now to FIG. 1, a block diagram of a distribution system 110 is shown, in accordance with one embodiment of the present invention. In the FIG. 1 embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1 embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1 distribution system 110 supports a "push" model that automatically selects and transmits appropriate advertising information to targeted device users based upon corresponding metadata that defines the device users, the user devices, and the various types of advertising information.

In the FIG. 1 embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118 or user devices 122.

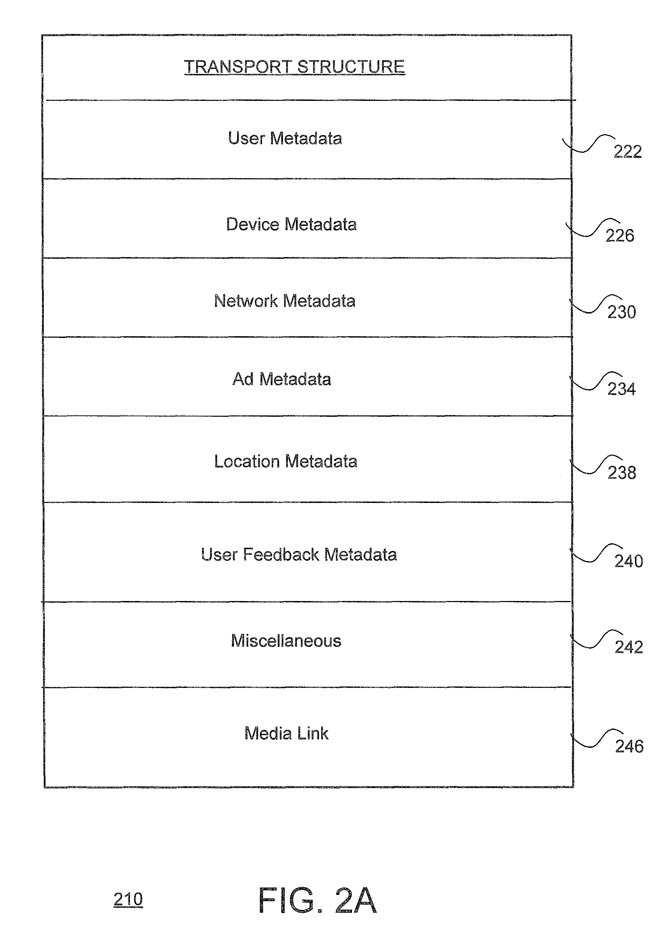

In accordance with the present invention, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, and respective advertisers and their advertisements from information service 118. In addition, the transport structures may also be utilized to transport or provide links to targeted advertisements and/or electronic content for access by appropriate user devices 122.

In traditional advertising models, advertisements are typically served to consumers without taking into account the consumer's personal preferences, location, the capabilities of device being used, and the consumer's current and past activities. Many times this advertising is not relevant. In addition, there is no mechanism for obtaining feedback from the consumers to gauge the effectiveness of advertising. These advertising efforts typically lack information collected from consumers' personal devices, buying patterns, and location. In addition, the current systems are not bi-directional and are not interactive.

In order to address these foregoing problems, the present invention provides an improved system and method for effectively performing an advertisement selection procedure in order to advantageously provide targeted and timely advertising to device users. Further details regarding the implementation and utilization of the FIG. 1 distribution system 110 are discussed below in conjunction with FIGS. 2A-7.

Referring now to FIG. 2A, a block diagram for one embodiment of a transport structure 210 is shown, in accordance with the present invention. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

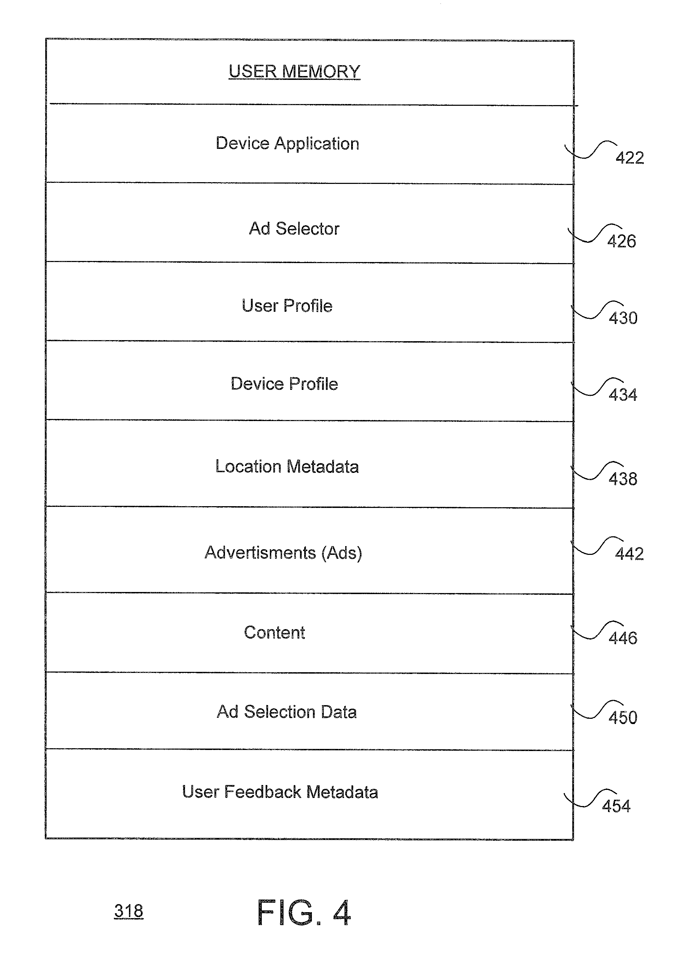

In the FIG. 2A embodiment, user metadata 222 may include information regarding one or more device users of user devices 122 (FIG. 1). User metadata 222 may include any desired type of information. For example, user metadata 222 may include, but is not limited to, past and present user behaviors, such as purchasing transactions and Internet browsing patterns. In certain embodiments, user metadata 222 may also include information selectively compiled from one or more appropriate user profiles 430 (FIG. 4).

Similarly, device metadata 226 may include any desired types of information regarding one or more user devices 122. For example, device metadata 226 may include, but is not limited to, specific functionalities and characteristics of corresponding user devices 122. In certain embodiments, device metadata 226 may be selectively compiled from one or more appropriate device profiles 434 (FIG. 4). In the FIG. 2A embodiment, network metadata 230 may include any desired types of information regarding various attributes or entities of electronic network 126 (FIG. 1).

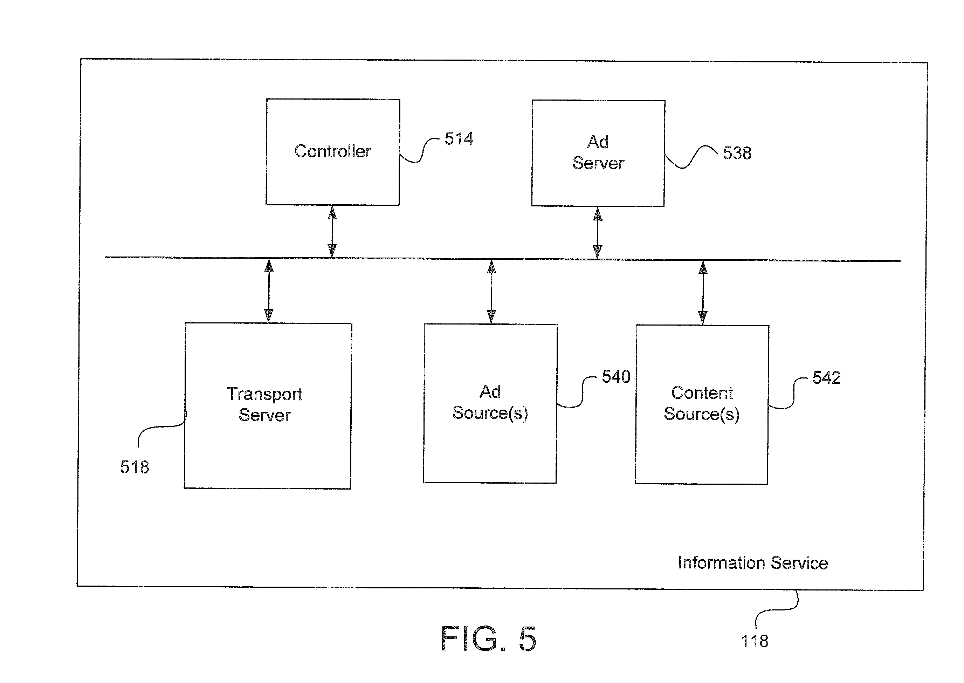

In the FIG. 2A embodiment, ad metadata 234 may include any desired types of information regarding one or more advertisers and advertisements that are associated with distribution system 110. In certain embodiments, the advertisements may be associated with ad sources 540 (FIG. 5). In the FIG. 5 embodiment, ad metadata 234 may include specific ad objectives that define advertising goals and purposes for corresponding advertisements. In addition, ad metadata 234 may include ad characteristics related to corresponding advertisements. For example, ad characteristics may include, but are not limited to, ad formats, ad lengths, and ad media types. In the FIG. 5 embodiment, ad metadata 234 may also include pricing information regarding the advertised product(s).

In certain embodiments, ad metadata 234 may include a set of ad instructions corresponding to each advertisement. The ad instructions may specify any desired criteria for selecting or rejecting a corresponding advertisement. For example, the ad instructions may specify when an ad should be displayed, how an ad should be displayed, how often an ad should be displayed, one or more formats in which an ad should be displayed, and to what intended audience an ad should be displayed. In accordance with certain embodiments of the present invention, these ad instructions may be individually evaluated in order to determine whether a particular advertisement should be selected and enabled for a given device user and corresponding user device 122.

In the FIG. 2A embodiment, location metadata 238 may include information regarding the current or past location(s) of one or more user devices 122. In certain embodiments, location metadata 238 may include, but is not limited to, various types of location coordinates and corresponding times that are collected from GPS modules of the user devices 122. In the FIG. 2A embodiment, user feedback metadata 240 may include any appropriate information that is generated by a device user or a user device 122 regarding the selection or reception of advertising information.

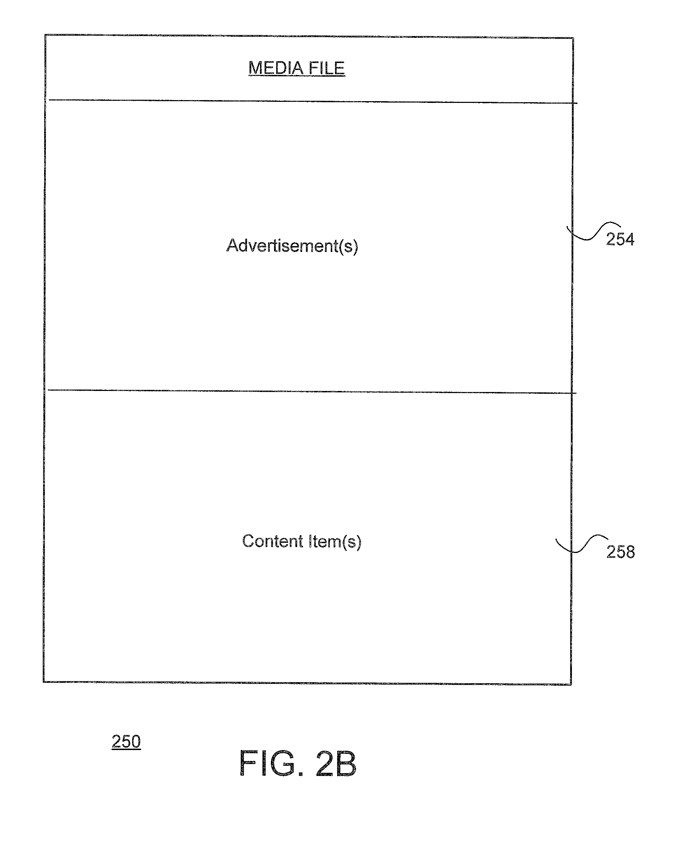

In certain embodiments, user feedback metadata 240 may include specific ad selections that are made by an ad selector (see FIG. 4), in accordance with the present invention. In addition, user feedback metadata 240 may include any effective type of interactive communication from one or more device users that indicates either a positive or a negative reaction to given advertisements. In certain embodiments, negative input from device users may be utilized to create a blacklist of advertisements that are banned by corresponding device users and their user devices 122. In the FIG. 2A embodiment, miscellaneous information 242 may include any additional data or other appropriate information. Media link 246 may include appropriate information to indicate a location or a connection means for accessing one or more media files, as discussed below in conjunction with FIG. 2B.

Various entities in distribution system 110 may utilize the information in transport structure 210 in any appropriate manner. For example, in accordance with the present invention, an ad selector (see FIG. 4) may perform an ad selection procedure by identifying and matching compatible elements of user metadata 222, device metadata 226, ad metadata 234, and location metadata 238 to thereby identify appropriate types of relevant advertising information for automatic transmission to targeted device users.

Transport structures 210 may be originated in any effective manner from any appropriate source. For example, transport structures 210 may be embedded in user devices 122 (FIG. 1), and activated by device users if desired. Alternately, various entities in network 126 or information service 118 may create or activate transport structures 210.

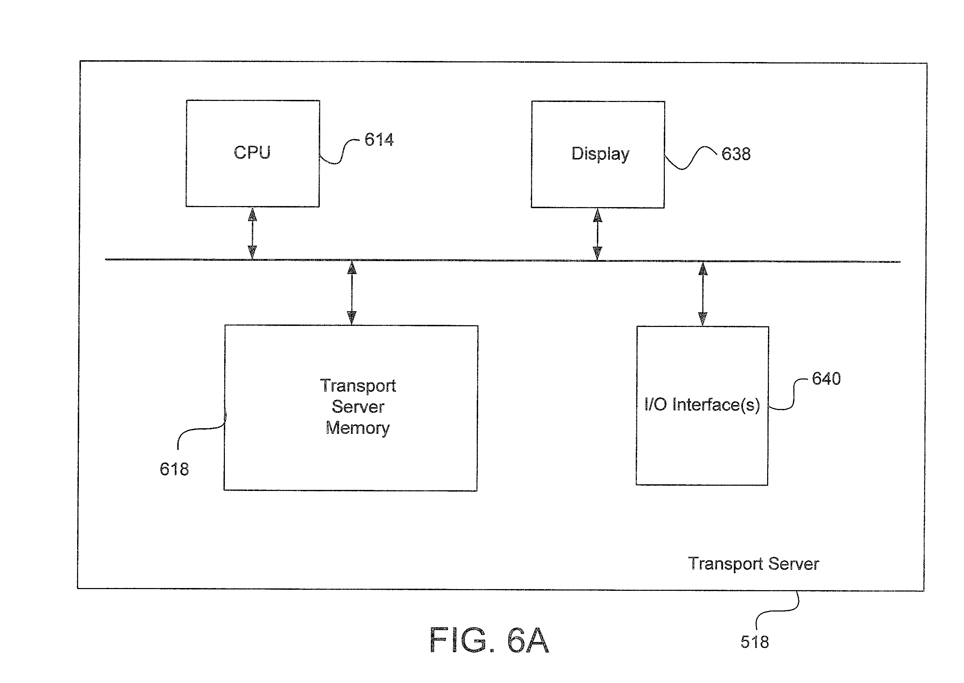

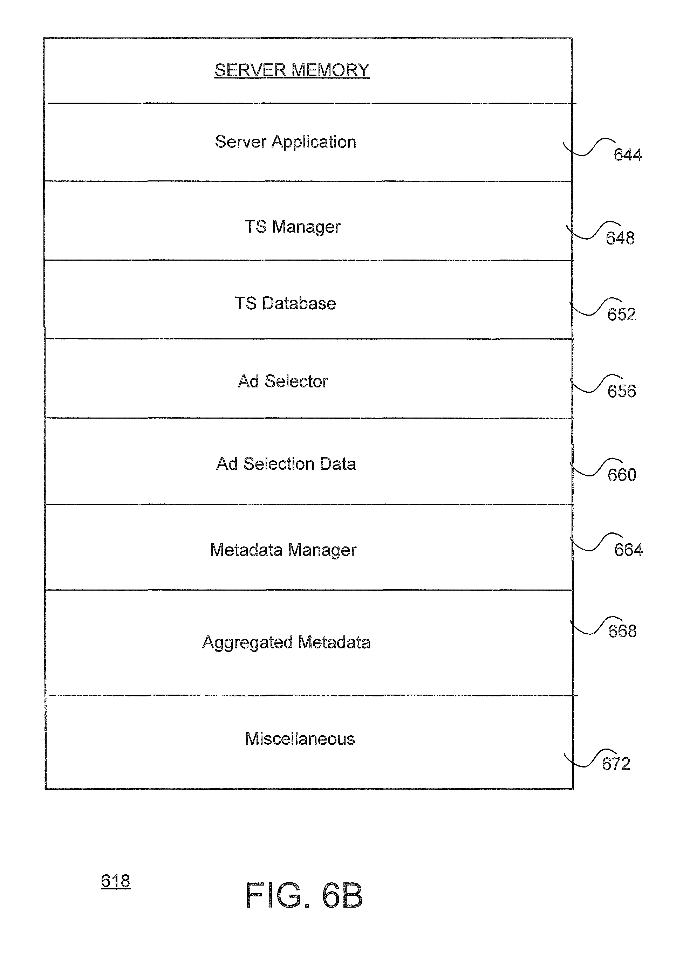

For example, a transport server (see FIG. 6) may manage the origination and operation of transport structures 210. Further details regarding the implementation and utilization of the FIG. 2A transport structure 210 are discussed below in conjunction with FIGS. 2B-7.

Referring now to FIG. 2B, a block diagram for one embodiment of a media file 250 is shown, in accordance with the present invention. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

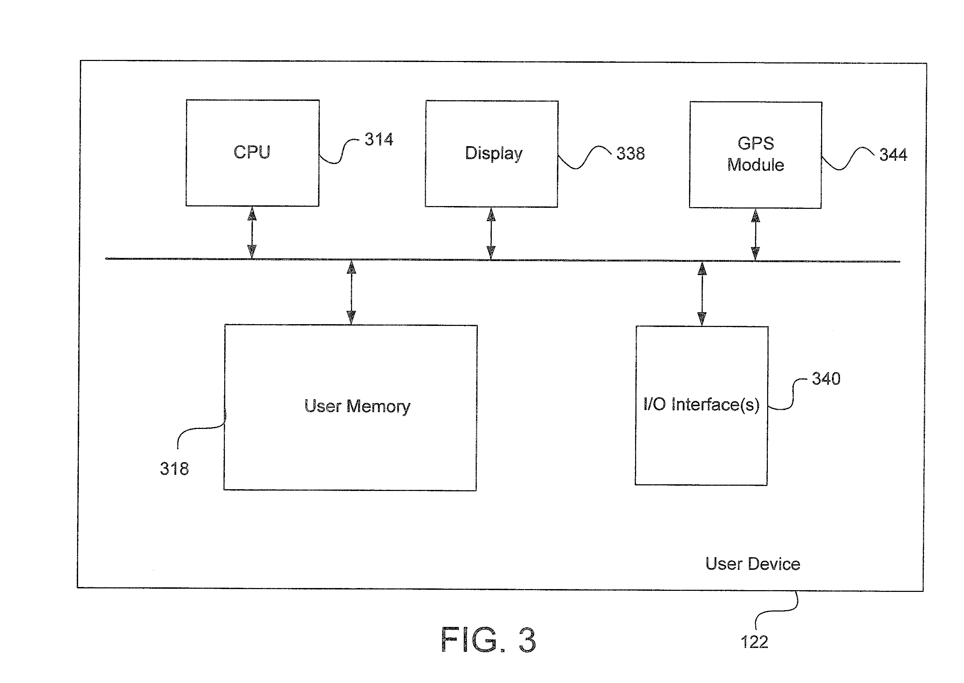

In the FIG. 2B embodiment, advertisements (ads) 254 may include any appropriate type of targeted advertising information that has been selected for transmission to appropriate ones of the user devices 122 (FIG. 1). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs. Further information for providing appropriate media files 250 to targeted device users is further discussed below in conjunction with FIGS. 3-7.

Referring now to FIG. 3, a block diagram for one embodiment of a FIG. 1 user device 122 is shown, in accordance with the present invention. In the FIG. 3 embodiment, user device 122 includes, but is not limited to, a central processing unit (CPU) 314, a memory 318, a display 338, a global positioning system (GPS) module 344, and one or more input/output interface(s) (I/O interface(s)) 340.

The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a digital camera, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122.

In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 3 embodiment, user device 122 may utilize GPS module 344 for performing any known or enhanced device location procedures to provide location coordinates corresponding to user device 122. Additional details for the utilization and management of user device 122 are further discussed below in conjunction with FIGS. 4-7.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122.

In the FIG. 4 embodiment, an ad selector 426 or other appropriate entity may perform an ad selection procedure by utilizing any effective techniques. In the FIG. 4 embodiment, ad selector 426 performs a metadata analysis upon the various types of metadata from transport structures 210 to make appropriate ad selections. In certain embodiments, ad selector 426 may analyze the gathered metadata in light of predefined selection criteria to identify specific targeting characteristics and parameters contained in the metadata. For example, targeting characteristics may include, but are not limited to, selected information from user metadata 222, device metadata 226, network metadata 230, ad metadata 234, and location metadata 238 (see FIG. 2A).

In the FIG. 4 embodiment, user device 122 may include a user profile 430 and a device profile 434 that collectively describe certain attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, credit-card transaction records, and user preferences. Similarly, device profile 434 may include, but is not limited to, a device type, a device manufacturer, supported device functionalities, and a device configuration.

In the FIG. 4 embodiment, advertisements (ads) 442 may include targeted advertising information that has been received via distribution system 110 (see FIG. 1) specifically for a device user of user device 122. Similarly, content 446 may include targeted electronic content information that has been received via distribution system 110 (FIG. 1) specifically for a device user of user device 122. In the FIG. 4 embodiment, ad selection data 450 may include any desired information to allow ad selector 426 to perform corresponding ad selection procedures, in accordance with the present invention. In many embodiments, the ad selection data 450 is typically different for each device user and user device 122. Information in ad selection data 450 may include metadata obtained from one or more transport structures 210 (FIG. 2A). Ad selection data 450 is typically updated over time, as metadata in transport structure 210 is modified and updated.

The present invention provides a mechanism for device users to participate in tailoring their received ads to his/her likes and dislikes. Ad selector 426 supports an effective process for selecting relevant ads from a pool of ads, based on factors such as product pricing and user feedback with respect to previously-transmitted ads, thereby serving the best ad to the consumer at the right time on the right device. This 'Best Ad Wins' technique significantly increases the effectiveness of advertisements from both the advertiser's and consumer's point of view.

The disclosed ad selection procedure provides a method for collecting, exchanging, and analyzing advertising, device user, and user device metadata to optimize the near real-time delivery of specific targeted ads to respective device users by collecting relevant pre-definable types of metadata from all points in an advertising ecosystem, and putting the collected metadata through an ad selection algorithm that identifies appropriate ads for returning to the user devices 122 for display.

The foregoing ad selection algorithm may be implemented to include any effective elements or selection techniques. In certain embodiments, the ad selection algorithm may be utilized to evaluate and identify relevant advertisements in light of a variety of ad selection factors. In the FIG. 4 embodiment, the different ad selection factors may be emphasized or de-emphasized by assigning weighting values that depend on the relative importance of the respective ad selection factors in making the advertisements both effective for the advertisers and relevant to the users.

In the FIG. 4 embodiment, the ad selection algorithm used in optimizing near real time delivery of specific ads to specific consumers may include any desired ad selection factors. For example, the ad selection factors may include, but are not limited to, device user information, user device information, geographical location information, user behavior information, advertisement objectives, and advertisement characteristic. In other embodiments, ad selection factors may include items in addition to, or instead of, certain of the ad factors listed above. In addition, the foregoing ad section factors may have one or more subsets that are considered as separate ad selection factors in the ad selection algorithm.

In certain embodiments, the ad selection algorithm may be expressed as formula of the sum of weighted ad selection factors, as shown below.

$$\text{Ad Selection Score} = w_1\,(UI) + w_2\,(DI) + w_3\,(LI) + w_4\,(UB) + w_5\,(AO) + w_6\,(AC)$$

where $W_1$, $W_2$, $W_3$, $W_4$, $W_5$, and $W_6$ are respective weighting factors, UI is device user information, DI is user device information, LI is geographical location information, UB is device user behavior, AO is advertisement objectives, and AC is advertisement characteristics.

The foregoing example of an ad selection algorithm is presented for purposes of illustration, and in alternate embodiments, ad selection algorithms may readily be implemented to include elements and functionalities in addition to, or instead of, certain of the elements and functionalities shown above. In certain embodiments, the value of the Ad Selection Score shown above may be utilized to quantify the relevance of corresponding advertisements during the ad selection procedure.

In the FIG. 4 embodiment, user feedback metadata 454 may include, but is not limited to, specific ad selections that are made by ad selector 426, in accordance with the present invention. In addition, user feedback metadata 454 may include any effective type of interactive communication from a device user that indicates either a positive or a negative reaction to given advertisements. In certain embodiments, negative input from the device user may be utilized to create a blacklist of advertisements that are banned by the device user and the corresponding user device 122. Further details regarding the implementation and utilization of the FIG. 4 user memory 318 are discussed below in conjunction with FIGS. 5-7.

Referring now to FIG. 5, a block diagram for one embodiment of the FIG. 1 information service 118 is shown, in accordance with the present invention. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2), in accordance with the present invention. Additional details regarding the implementation and utilization of transport server 518 are further discussed below in conjunction with FIGS. 6A-6B. In the FIG. 5 embodiment, ad source(s) 540 may include one or more appropriate entities for providing advertisement information for dissemination through distribution system 110 (FIG. 1). For example, ad sources 540 may include various commercial enterprises, specific advertisers, or advertising developers.

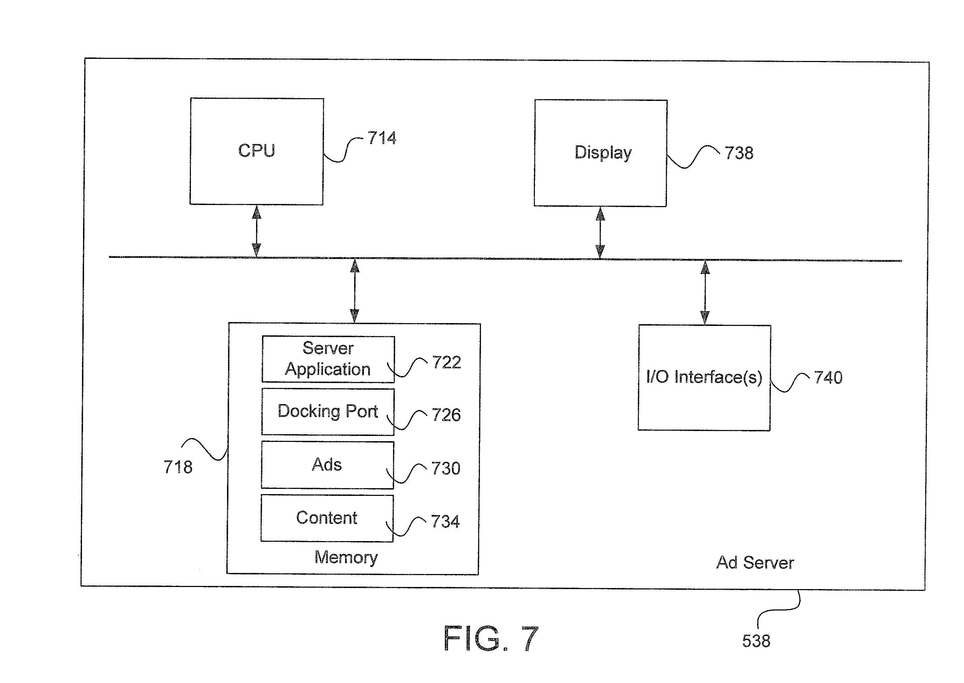

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1) by utilizing metadata from one or more transport structures 210 (FIG. 2). One embodiment of ad server 538 is further discussed below in conjunction with FIG. 7. Additional details for the implementation and utilization of information service 118 are further discussed below in conjunction with FIGS. 6-7.

Referring now to FIG. 6A, a block diagram for one embodiment of the transport server 518 of FIG. 5 is shown, in accordance with the present invention. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by transport server 518. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

Referring now to FIG. 6B, a block diagram for one embodiment of the FIG. 6A transport server memory 618 is shown, in accordance with the present invention. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed and described below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A), in accordance with the present invention. In certain embodiments, the TS manager 648 may include a registration module for coordinating registration procedures to register device users of user devices 122 for participating in various authorized distribution services from distribution system 110 (FIG. 1). A TS database 652 may include any appropriate information regarding the transport structures 210 that provide distribution services to various entities in distribution system 110. In certain embodiments, the TS manager 648 may continually update respective transport structure information in the TS database 652 to reflect the current status of transport structures 210 in distribution system 110.

In certain embodiments, the transport server 518 may include an ad selector 656 and ad selection data 660 for performing ad selection procedures on behalf of one or more device users and corresponding user devices 122. In the FIG. 6B embodiment, ad selector 656 and ad selection data 660 may be implemented to perform the same or similar functions as the corresponding ad selector 426 and ad selection data 450 of user device 122 (see FIG. 4), except that ad selector 656 and ad selection data 660 may perform individual ad selection procedures for any desired number of device users and corresponding user devices 122. The foregoing FIG. 4 discussion regarding functionality and utilization of selector 426 and ad selection data 450 is therefore incorporated here by reference with respect to the functionality and utilization of selector 656 and ad selection data 660. In other words, ad selection procedures may be performing either locally by individual user devices 122, or remotely by a central entity such as transport server 518.

In the FIG. 6B embodiment, a metadata manager 664 or other appropriate entity may perform a metadata analysis/aggregation procedure upon metadata from transport structures 210 by utilizing any effective techniques. In certain embodiments, the metadata analysis/aggregation procedure identifies various types and categories of aggregated metadata 668 for utilization by ad selector 656 during ad selection procedures. In certain embodiments, metadata manager 664 may analyze the metadata gathered from user devices 122 and corresponding device users in light of certain predefined criteria to identify specific targeting characteristics and parameters in aggregated metadata 668. For example, targeting characteristics may include, but are not limited to, selected characteristics from user metadata 222, device metadata 226, network metadata 230, and ad metadata 234 (see FIG. 2A). In the FIG. 6B embodiment, miscellaneous information 672 may include any desired type of information or data for utilization by transport server 518.

Referring now to FIG. 7, a block diagram for one embodiment of the ad server 538 of FIG. 5 is shown, in accordance with the present invention. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze ad selections from user devices 122, transport server 518, or other appropriate entities to identify and provide appropriate advertisements to targeted device users of user devices 122 (FIG. 1).

In the FIG. 7 embodiment, docking port 726 may include any effective interface means for ad server 538 to bi-directionally communicate with one or more transport structures 210 (FIG. 2) to transfer ads 730, content 734, or ad selection information. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

For all of the foregoing reasons, the present invention therefore provides an improved system and method for effectively performing an advertisement selection procedure. The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

Various respective aspects and features of the invention are defined in the appended claims. Combinations of features from the dependent claims may be combined with features of the independent claims as appropriate and not merely as explicitly set out in the claims.

**Claims**

1. A system for performing an advertisement selection procedure in an information distribution network, comprising:

   an information service that is configured to provide information distribution services through said information distribution network;
   user devices that device users utilize to communicate with said information service for receiving said information distribution services; and
   an advertisement selector that evaluates metadata during said advertisement selection procedure to thereby identify targeted advertisements for providing to said user devices through said information distribution network.

2. The system of claim 1 further comprising a transport structure that communicates with network entities in said information distribution network, said transport structure collecting said metadata for performing said advertisement selection procedure.

3. The system of claim 1 wherein said metadata includes user metadata regarding said device users, device metadata regarding said user devices, location metadata for said user devices, and advertisement metadata regarding said targeted advertisements.

4. The system of claim 3 wherein said user metadata includes past and present user behaviors including user purchasing transactions and user Internet browsing patterns, and wherein said user metadata includes personal profile information including a personal name, a gender, an age, a religion, hobbies, interests, an occupation, a marital status, a residence, income, and personal preferences of said device users.

5. The system of claim 3 wherein said device metadata includes specific functionalities, operating capabilities, and characteristics of said user devices.

6. The system of claim 3 wherein said advertisement metadata includes specific advertisement objectives that define advertising goals for said targeted advertisements, said advertisement metadata also including advertisement characteristics that include ad formats, ad lengths, ad media types, and pricing information regarding advertised products, and wherein said advertisement metadata includes sets of advertisement instructions corresponding to each of said targeted advertisements, said advertisement instructions specifying selection criteria for performing said advertisement selection procedure, said selection criteria including when an advertisement should be displayed, how said advertisement should be displayed, how often said advertisement should be displayed, one or more formats in which said advertisement should be displayed, and to what intended audience said advertisement should be displayed.

7. The system of claim 3 wherein said location metadata includes current and past locations of said user devices including location coordinates and corresponding times that are obtained from GPS modules of said user devices.

8. The system of claim 2 further comprising a transport server that monitors and controls operations of said transport structure in said information distribution network.

9. The system of claim 8 wherein said advertisement selector is implemented in said transport server to perform said advertisement selection procedure on behalf of said user devices.

10. The system of claim 9 wherein said advertisement selector is implemented in one or more of said user devices to locally perform said advertisement selection procedure.

11. The system of claim 1 wherein said device users provide user feedback metadata that includes interactive communications from said device users to indicate either a positive or a negative reaction to said targeted advertisements, negative inputs from said device users being utilized to create a blacklist of banned advertisements.

12. The system of claim 1 wherein an advertisement selection algorithm is utilized to evaluate and identify said targeted advertisements in light of advertisement selection factors, wherein said advertisement selection factors are emphasized or de-emphasized by assigning weighting values that depend on relative priorities of said advertisement selection factors.

13. The system of claim 12 wherein said advertisement selection factors include device user information, user device information, geographical location information, user behavior information, advertisement objectives, and advertisement characteristics.

14. The system of claim 13 wherein said advertisement selection algorithm is expressed as a sum of weighted ad selection factors according to a formula:

$$\text{Ad Selection Score} = W_1 (UI) + W_2 (DI) + W_3 (LI) + W_4 (UB) + W_5 (AO) + W_6 (AC)$$

where $W_1$, $W_2$, $W_3$, $W_4$, $W_5$, and $W_6$ are respective weighting factors, UI is said device user information, DI is said user device information, LI is said geographical location information, UB is said device user behavior, AO is said advertisement objectives, and AC is said advertisement characteristics.

15. A user device for use in a system for performing an advertisement selection procedure in an information distribution network according to any one of claims 1 to 14, the user device comprising:

a device application that manages metadata that is related to said user device and to a device user of said user device; and
an advertisement selector that evaluates said metadata during an advertisement selection procedure to thereby identify targeted advertisements for providing to said user device through said information distribution network.

FIG. 1

110

| TRANSPORT STRUCTURE |
|---|
| User Metadata |
| Device Metadata |
| Network Metadata |
| Ad Metadata |
| Location Metadata |
| User Feedback Metadata |
| Miscellaneous |
| Media Link |

222

226

230

234

238

240

242

246

210

# FIG. 2A

MEDIA FILE

Advertisement(s)                                              254

Content Item(s)                                              258

250

FIG. 2B

FIG. 3

EP 2 434 448 A2

| USER MEMORY |
|---|
| Device Application |
| Ad Selector |
| User Profile |
| Device Profile |
| Location Metadata |
| Advertisments (Ads) |
| Content |
| Ad Selection Data |
| User Feedback Metadata |

422

426

430

434

438

442

446

450

454

318      FIG. 4

EP 2 434 448 A2

FIG. 5

EP 2 434 448 A2

CPU ⟋ 614

Display ⟋ 638

Transport
Server
Memory

618

I/O Interface(s) ⟋ 640

Transport Server

**FIG. 6A**

518

| SERVER MEMORY |
|:---:|
| Server Application |
| TS Manager |
| TS Database |
| Ad Selector |
| Ad Selection Data |
| Metadata Manager |
| Aggregated Metadata |
| Miscellaneous |

644

648

652

656

660

664

668

672

618

# FIG. 6B

FIG. 7